(19)

Europäisches Patentamt

European Patent Office

Office européen des brevets

(11) **EP 4 191 526 A1**

(12) **EUROPEAN PATENT APPLICATION**

(43) Date of publication:
**07.06.2023 Bulletin 2023/23**

(21) Application number: **22208523.5**

(22) Date of filing: **21.11.2022**

(51) International Patent Classification (IPC):
**G06T 7/70** (2017.01)

(52) Cooperative Patent Classification (CPC):
**G06T 7/70;** G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.12.2021 CN 202111460674
11.10.2022 KR 20220129712**

(71) Applicant: **Samsung Electronics Co., Ltd.
Gyeonggi-do 16677 (KR)**

(72) Inventors:
• **Li, Weiming
Beijing (CN)**

• **Wang, Qiang
Beijing (CN)**
• **Chang, Hyun Sung
Suwon-si, Gyeonggi-do (KR)**
• **Kim, Jiyeon
Suwon-si, Gyeonggi-do (KR)**
• **Hong, Sunghoon
Suwon-si, Gyeonggi-do (KR)**
• **He, Bao
Beijing (CN)**

(74) Representative: **Grünecker Patent- und
Rechtsanwälte
PartG mbB
Leopoldstraße 4
80802 München (DE)**

(54) **APPARATUS AND METHOD WITH OBJECT POSTURE ESTIMATING**

(57) An apparatus and method of estimating an object posture are provided. A method includes determining key point information in an image to be processed, determining modified key point information based on a key point feature map corresponding to the key point information, and estimating an object posture of an object in the image to be processed, based on the modified key point information.

FIG. 1

EP 4 191 526 A1

**Description**

BACKGROUND

1. Field

The following description relates to computer vision, and more particularly, to an apparatus and method with object posture estimating.

2. Description of Related Art

Computer vision-based augmented reality (AR) may provide a user with a realistic information experience by superimposing virtual content over a real scene being viewed by the user.

To display a high-quality virtual reality that is tightly coupled (e.g., geometrically) with the real scene being viewed by the user, an AR system may need high-precision real-time processing and understanding of the 3-dimensional (3D) state of a real object in the real 3D space or scene being viewed by the user. Therefore, fast and accurate estimation (3D modeling) of an object's posture may improve the quality of a user's AR experience and interactions, among other things.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is claimed in the independent claims. Preferred embodiments are specified in the dependent claims.

The present disclosure describes apparatuses and methods for estimating an object posture.

In one general aspect, a method of estimating an object posture includes determining key point information in an image to be processed; determining modified key point information based on a key point feature map corresponding to the key point information; and estimating an object posture of an object in the image to be processed, based on the modified key point information.

The method may further include, prior to the determining the key point information in the image to be processed: receiving an input image; and obtaining the image to be processed by converting the input image to an image having a preset image style.

The obtaining the image to be processed by converting the input image to the image having the preset image style may include: extracting an image-content feature of the input image through a content neural network; obtaining a preset image-style feature; generating an integrated feature by integrating the image-content feature of the input image with the preset image-style feature; and obtaining the image to be processed by rendering the input image with a renderer, wherein the rendering is based on the integrated feature.

The image-content feature of the input image may include a low-resolution image-content feature, and the preset image-style feature may include a low-resolution image-style feature.

The determining the modified key point information based on the key point feature map corresponding to the key point information may include: obtaining key point offset residual information by performing offset regression on the key point feature map corresponding to the key point information; and obtaining the modified key point information based on the key point offset residual information and the key point information.

The method may further include performing a refinement process on the object posture to increase an accuracy thereof by using the estimated object posture estimated in the image to be processed.

The key point information may include two-dimensional (2D) key point information, and the performing the refinement process may include: determining 3D key point mapping information of an object in the image to be processed based on the object posture; obtaining updated key point information based on the 3D key point mapping information; redetermining the modified key point information based on the updated key point information; and estimating the object posture in the image to be processed, based on the redetermined modified key point information.

The determining the 3D key point mapping information in the image to be processed, based on the object posture estimated in the image to be processed, may include determining the 3D key point mapping information in the image to be processed, based on the object posture estimated in the image to be processed, a preset 3D model set corresponding to the object, and a camera eigen matrix.

The performing the refinement process on the object posture to increase the accuracy of estimating an object posture by using the object posture estimated in the image to be processed may include iteratively performing the refinement process on the estimated object posture up until a termination condition is satisfied, in which the termination condition includes either a difference of a key point before and after modification less than a threshold or the number of modifications of the key point reaching a predetermined number of times.

The difference of a key point before and after modification being less than a threshold may include either a sum of differences of at least one key point before and after modification being less than the threshold, or a difference of each key point of the at least one key point before and after modification being less than the threshold.

The determining the key point information in the image to be processed may include determining key point coordinate information and key point visible information in the image to be processed through a detector network that processes the image; and determining the key point information based on the key point coordinate information and the key point visible information.

The determining the key point information in the image to be processed may further include obtaining a region of interest (RoI) feature map in the image to be processed through the detector network, and, prior to the determining the modified key point information based on the key point feature map corresponding to the key point information, determining the key point feature map corresponding thereto in the RoI feature map, based on the key point information.

The method may further include determining an object category of the object in the image to be processed through the detector network when there are two or more objects in the image to be processed and, prior to the determining the modified key point information based on the key point feature map corresponding to the key point information, determining the key point feature map corresponding thereto, based on the object category and the key point information.

In another general aspect, a method of estimating an object posture includes converting an input image to an image having a preset image style; determining key point information in the image having the preset image style; and estimating an object posture in the input image having the preset style based on the key point information.

In another general aspect, an apparatus for estimating an object posture includes one or more processors and storage storing instructions configured to, when executed by the one or more processors, cause the one or more processors to: key point information in an image to be processed; a modifier configured to determine modified key point information based on a key point feature map corresponding to the key point information; and an estimator configured to estimate an object posture of an object in the image to be processed based on the modified key point information.

The image may be converted from an input image to a version of the input image in an image style that the input image does not have.

The determining the key point information may include extracting an image-content feature of the input image through a content backbone network, obtain a preset image-style feature, generate an integrated feature by integrating the image-content feature of the input image with the preset image-style feature, and obtain the image to be processed by rendering the input image with a renderer, based on the integrated feature.

The modifying may include obtaining key point offset residual information by performing offset regression on the key point feature map corresponding to the key point information, and obtaining the modified key point information based on the key point offset residual information and the key point information.

The estimating may include performing a refinement process on the object posture to increase an accuracy of estimating an object posture by using the object posture estimated in the image to be processed.

Other features and aspects will be apparent from the following detailed description, the drawings, and the claims.

BRIEF DESCRIPTION OF THE DRAWINGS

FIG. 1 illustrates an example of estimating an object posture, according to one or more embodiments.

FIG. 2 illustrates another example of estimating an object posture, according to one or more embodiments.

FIG. 3 illustrates an example of a process of converting an image style, according to one or more embodiments.

FIG. 4 illustrates an example of a refinement method of estimating an object posture, according to one or more embodiments.

FIG. 5 illustrates an example of a configuration of a refinement network, according to one or more embodiments.

FIG. 6 illustrates an example of representing modified key point information, according to one or more embodiments.

FIG. 7 illustrates an example of an iterative refinement process to estimate an object posture, according to one or more embodiments.

FIG. 8 illustrates another example of representing modified key point information, according to one or more embodiments.

FIG. 9 illustrates an example of an overall process of estimating an object posture, according to one or more embodiments.

FIG. 10 illustrates an example of representing an object posture estimated from an image to be processed, according to one or more embodiments.

FIG. 11 illustrates another example of estimating an object posture, according to one or more embodiments.

FIG. 12 illustrates an example of an apparatus for estimating an object posture, according to one or more embodiments.

FIG. 13 illustrates another example of an apparatus for estimating an object posture, according to one or more embodiments.

FIG. 14 illustrates an example of an electronic device, according to one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

The same name may be used to describe an element included in the example embodiments described above and an element having a common function. Unless otherwise mentioned, the descriptions on the example embodiments may be applicable to the following example embodiments and thus, duplicated descriptions will be omitted for conciseness.

A method of estimating an object's posture may generally include two main operations. First, an initial posture may be estimated by various techniques. Second, a previous posture, e.g., the initial posture, is refined by using a rendering-comparison technique, for example.

However, such a refinement process often involves image rendering. The image rendering may use a large amount of computing resources. The required computing time for rendering may create latency in an AR application scenario, which may degrade a user's experience. In short, the typical method of estimating an object posture may need significant time and may not satisfy a speed-related usage requirement of an AR scenario.

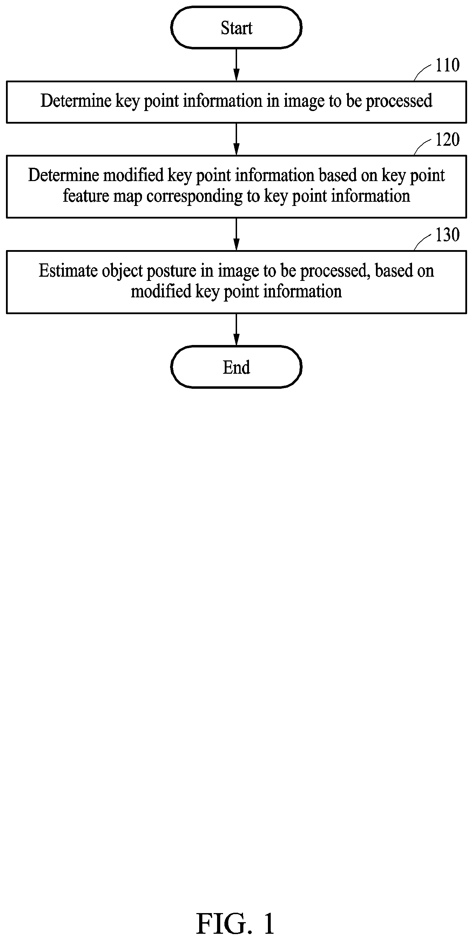

Hereinafter, examples of apparatuses and methods of estimating an object posture is described in detail with reference to FIGS. 1 to 14.

FIG. 1 illustrates an example process of estimating an object posture, according to one or more embodiments.

Referring to FIG. 1, in operation 110, an apparatus for estimating an object posture ("apparatus" hereafter) may determine key point information in an image to be processed for posture estimation ("input image"). The input image is an image of an actual object in an actual scene (e.g., an image of a scene captured by a camera) and from which posture of the object is to be estimated. Or the input image may be an image in which an object posture is estimated after performing certain processing on the input image. The input image may have one or more objects represented therein (as pixel/image data), and examples thereof are not limited thereto.

A key point is a point of a feature of an object, and each input image may have one or more such key points. For example, when an object is a table, key points of the object may correspond to a corner, a plate edge, a leg, a texture, or a pattern, but examples are not limited thereto. Key point features may be geometric features, color features, texture features, semantic/inferred features, or any other type of image feature.

The key point information in operation 110 may be obtained in a process of extracting (in real time, in the case of an interactive application) key point information from the input image, accessing key point information already extracted from the image to be processed, or the like. Any method of determining key point information may be used and the examples described herein are non-limiting. For estimating an object posture, key points may be extracted by using one or more neural networks of various types.

In operation 120, the apparatus may determine modified key point information by modifying the key point information based on a key point feature map corresponding to the key point information.

In this case, the key point feature map may be obtained by cropping a feature map corresponding to the input image. The feature map corresponding to the input image may be a region of interest (RoI) feature map, that is, a depth feature map extracted from an RoI of each respective object, but examples are not limited thereto.

In an example, in operation 120 a refinement operation may be performed on the key point feature map (the refinement operation may also be referred to as an improvement operation, an optimization operation, or the like). As will be described, the refined key point feature map may be used for key point-based object posture estimation and may improve the performance thereof. Compared to a typical method of estimating an object posture by using a key point without refinement, examples herein may improve the accuracy of estimating an object posture without excessively depending on the accuracy of a key point. That is, key point sensitivity may be reduced.

In operation 130, the apparatus may estimate an object posture of an object in the input image based on the refined (or modified) key point information. The object posture may be used to explain a relative position of an object between two coordinate systems. In an example, the object posture may be a 6 degrees of freedom (DoF) posture of the object, but examples are not limited thereto. Specifically, the 6 DoF posture may characterize a relative position of an object in a space as three translational DoF and three rotational DoF. Any format capable of representing an object's posture as a three-dimensional (3D) location and orientation may be used. Moreover, object posture may include fewer dimensions and may include only an object's position or an object's orientation.

In an example, the key point may be a 2D key point projected into a 2D image from a 3D key point corresponding to the object. In other words, examples herein may estimate a 3D posture of the object based on a modified (refined) 2D key point projected from a 3D key point.

Examples herein may estimate the object posture in the input image based on the modified key point information, and may thus, depending on implementation, reduce an issue of data noise and/or data omission.

Examples herein may be used in a stationary terminal and/or a mobile terminal, for example, in a mobile phone, a tablet personal computer (PC), a laptop, a wearable device, a game console, a desktop, an all-in-one computer, a vehicle terminal, and the like. A wearable device may be also referred to as a smart wearable device and may be a portable device that may be integrated with clothes or accessories or directly worn on the body, such as glasses, helmets, headbands, watches, wristbands, smart clothes, smart bags, canes, accessories, and the like. In actual application, the wearable device may include an application function that may be integrally implemented and may be used independently without depending on another device, such as a smartphone, or may be used together with the other device by including a certain type or some of the application function, but examples are not limited thereto.

Methods of estimating an object posture in examples described herein may adopt a key point-based refinement method of estimating an object posture, in which the accuracy of estimating an object posture is increased and image rendering may be obviated. Accordingly, the processing speed of an AR application may be improved.

Posture estimation based on typical supervised learning may require a large amount of training data having a large number of annotations of actual postures, which may incur a large amount of manpower and time, is more likely to cause an error, and limits optimal performance of the supervised learning approach.

Methods of estimating object posture in examples herein may use a computer graphics processor (or 3D rendering engine) to collectively synthesize (generate) training data including actual posture annotations, for a known 3D model ("actual" refers to the fact that postures can be directly and accurately computed for a 3D model being rendered). The synthesized training data may be used to train a model. However, such training data including actual posture annotations (for synthetic images of an object/model) may have a certain style, such as a composite (synthetic) image style (e.g., a "non natural" style). When processing a captured input image (not a composite image style), a gap may occur in information fields between pieces of data of derived from differing image styles, which may affect the performance of the model.

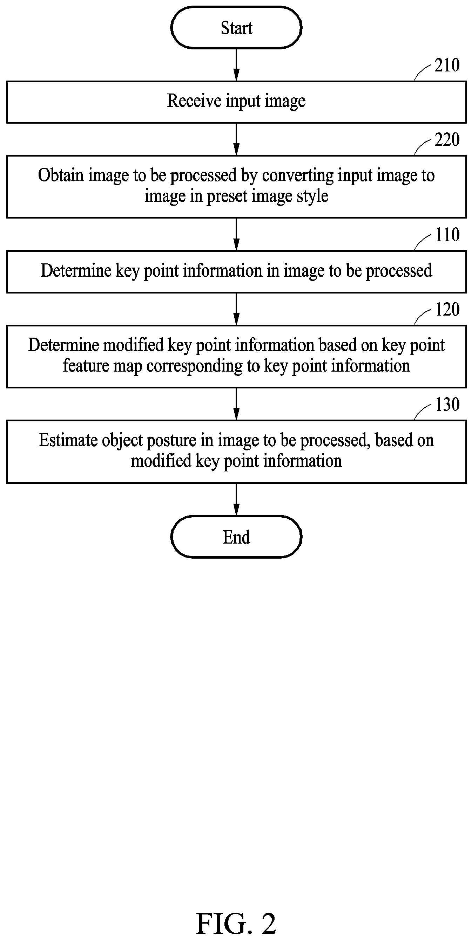

FIG. 2 illustrates another example of a process of estimating an object posture, according to one or more embodiments.

Referring to FIG. 2, the apparatus may receive an initial input image in operation 210 (prior to operation 110). In operation 220, the apparatus may convert the initial input image to an image having a preset image style(an image to be processed).

In other words, the image to be processed may be an image for which an object posture is estimated after performing certain processing (e.g., image style conversion) on the input image. The image to be processed may be a version of the input image, but with a different image style.

An image style may be a visual effect provided by various image properties such as lighting, texture, color temperature, tone, contrast, saturation, luminance, and the like. An oil painting style, a drawing style, a cartoon style, and the like are examples of different image styles. An input image (a photo of an actual scene) captured by an image capturing device (e.g., a camera) and a composite image (a virtual image synthesized by a processor or rendering engine) may be different respective styles. The input image may be generally more delicate in texture and darker in luminance than the composite image. When being processed for object posture, an image may cause a different effect according to its image style, even for the same image content.

In an example, the preset image style may be, for example, an image style of training images in a set of training data, where the training images have actual (precise) corresponding posture annotations used to train a model. Such a preset image style may be referred to as a composite image style, but examples are not limited thereto.

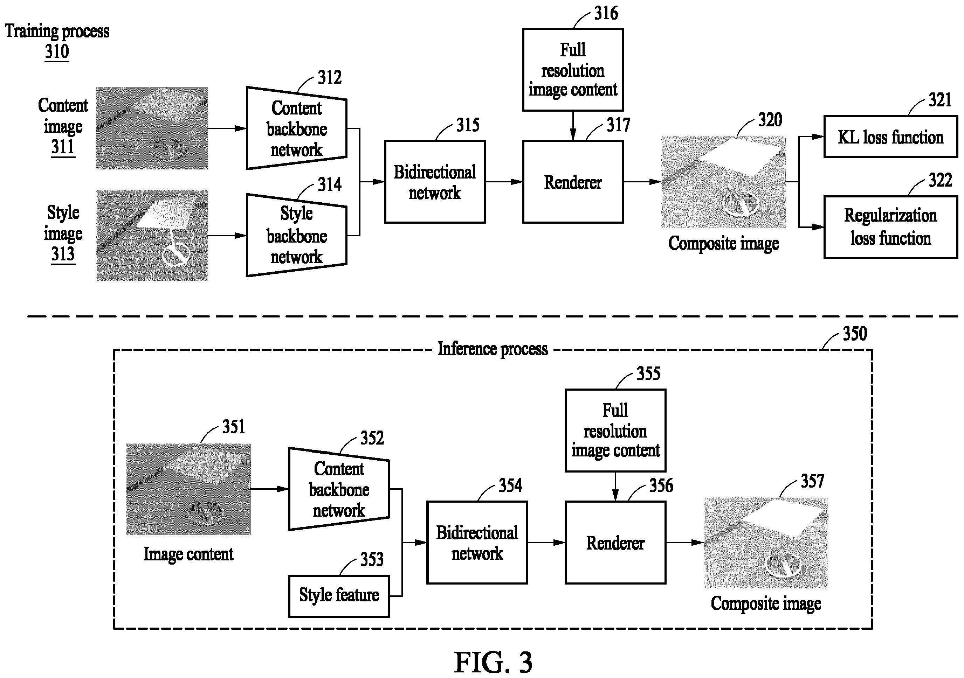

FIG. 3 illustrates an example of a process of converting an image style of an input image, according to one or more embodiments. The upper part of FIG. 3 shows a training process 310 and the lower part of FIG. 3 shows an inference process 350. The content backbone network 352 may be a trained version/iteration of the content backbone network 312. The bidirectional network 354 may be a trained version of the bidirectional network 315. The renderer 356 may be a trained version of the renderer 317. In other words, the model of the training process 310 and the model of the inference process 350 may be the same (for some components/networks). The composite image 320 outputted by the model during the training process 310 may be used for training any or all of the networks (which are neural networks), and the composite image 357 outputted by the trained model may be used for determining a corresponding object posture. The backbone networks referred to herein may be any type of suitable neural networks; the "backbone" qualification of the neural networks described herein is non-limiting.

Referring to FIG. 3, the process of converting an image style of an input image may include the following four operations.

A first operation may extract a feature of image content (an image-content feature) of an input image through a content backbone network 352 (a neural network). Singular features described herein may, per context, be representative of multiple features of the same type, and a given operation producing, or operating on, a "feature" will in practice produce or operate on multiple such features.

In an example, the image-content feature may be a feature extracted from a low-resolution content image (e.g., from content of a low-resolution input image 351). The low-resolution content image may be a lower resolution version of the full resolution input image. In an example, the degree of low resolution may not be specifically limited and may be set based on an actual situation. In an example, the content backbone network 352 may directly extract a low-resolution image-content feature from an input actual image (i.e., the backbone network 352 may include one or more layers for both resolution-lowering and image-content feature extraction).

In the example in FIG. 3, the low-resolution image-content feature may be extracted by inputting, to the content backbone network 352, the low-resolution input image 351, which may be obtained by downsampling the input image. However, examples are not limited to the example in FIG. 3, and images input to the content backbone network 352 may be obtained based on different training methods.

A second operation of converting the image style of the input image may involve obtaining a preset image-style feature (e.g., a preset low-resolution image-style feature 353). In the examples herein, an image-style feature may be a low-resolution image-style feature.

In actual application, a suitable low-resolution image-style feature may be set in advance (e.g., by a human operator), based on an actual situation, and the examples herein may not specifically limit the type and content of a low-resolution image-style feature. A preset low-resolution image-style feature may be directly obtained and used in an online inference process.

In an example, the low-resolution image-style feature may directly use data in a training process and improve efficiency and reliability. For example, the preset low-resolution image-style feature may be an average value of low-resolution image-style features of training samples used in the training process.

The training process 310 illustrated in FIG. 3 is described next.

A style conversion network model (one or more neural networks) used in the training process 310 may perform three operations; the obtaining of an image-content feature and an image-style feature, bidirectional prediction, and rendering. In some embodiments, the three operations above may specifically be the extraction of a low-resolution image-content feature and a low-resolution image-style feature, low-resolution bidirectional prediction, and full-resolution rendering.

In the training process 310, two images (downsampled low-resolution images may be directly used) may be input as a pair of training samples. One is an input image sample (e.g., content image 311), and the other is an image sample in a preset style (e.g., a style image 313, and a composite image may be used). An image-content feature of the (low-resolution) input image sample and an image-style feature of the (low-resolution) composite image sample may be extracted by two respective backbone networks, for example, a content backbone network 312 and a style backbone network 314 (any suitable neural networks, e.g., convolutional neural networks, may be used). The image-style feature of the (low-resolution) composite (synthetic/artificial) image sample may be stored and later used in an inference process 350 performed by the neural networks as trained by the image sample. In other words, an average value of low-resolution image-style features each corresponding to each image sample in a preset image-style that is used in the training process 310 may be used corresponding to the preset low-resolution image-style feature obtained in the inference process 350 described above. The "low-resolution" in parentheticals indicates that a low-resolution image is optional; any resolution may be used, including an original resolution.

In addition, in the model training process 310, the image-content feature extracted from the (low-resolution) input image sample (the content image) and the image-style feature extracted from the (low-resolution) composite/synthetic image sample (the style image) may be input to a (low-resolution) bidirectional network 315 (another neural network), and the (low-resolution) bidirectional network 315 may integrate the extracted image-content feature with the extracted image-style feature.

Specifically, the (low-resolution) bidirectional network 315 may use the (low-resolution) image-content feature and image-style feature as input prediction coefficients, train a joint distribution of low-level features, and predict a bidirectional grid, in which the bidirectional grid may train a transcoding method.

In addition, in the model training process 310, the (low-resolution) bidirectional network 315 may output a feature-integration result to a (full-resolution) renderer 317, and the (full-resolution) renderer 317 may perform (full-resolution) rendering and output a (full-resolution) composite image 320 based on (i) the feature-integration result from the (low-resolution) bidirectional network 315 and (ii) the input image sample (e.g., full-resolution content image 316, which may be a higher resolution version of the content image 311, or may be the same as the content image 311). Specifically, a sampling operation may use a predetermined kernel (e.g., a 3x4 kernel) through multiplication (e.g., convolution) and sample each pixel in the predicted bidirectional grid. The training process 310 may verify whether image content (e.g., content of content image 311) and a corresponding image style (e.g., the image style of style image 313) together satisfy a training termination condition. The verifying may be based on a training sample (a paired content image and style image) used to generate an output composite image, and when the training termination condition is satisfied, the training process 310 may result in a trained style conversion network model, and otherwise, by adjusting model parameter(s), may continue to train the style conversion network model. Note that the parentheticals of "full resolution" indicate that full-resolution is optional; any resolution may be used.

In examples herein, a loss function used in the training process 310 of a model may include a Kullback-Leibler (KL) loss function 321 and a bidirectional spatial Laplacian regularization loss function 322, but examples are not limited thereto.

The content backbone network 312/352 included in the trained style conversion network model may be used in the first of the operations for converting an image style. The (low-resolution) bidirectional network 315/354 and the (full-resolution) renderer 317/356 may be respectively used in third and fourth operations for converting an image style.

The third operation may obtain an integration-feature by integrating an image-content feature with an image-style feature through a bidirectional network 354. For example, a low-resolution integration-feature from integrating a low-resolution image-content feature with a low-resolution image-style feature may be predicted by inputting two low-resolution features to the trained (low-resolution) bidirectional network 354.

The fourth operation of converting an image style based on an integration feature may render a composite input (an image to be processed) through the renderer 317/356. In this case, the input image (to the renderer 317/356) may be an input content image, and when inputting the input content image and the integration-feature to a trained renderer and rendering the input image and the integration feature, a generated image (the composite image to be processed) having content the same as that of the input image (e.g., a same object is in the input image and the generated image) and having a preset image style may be obtained. The composite image may be an image to be processed and may be used in a subsequent refinement operation and object posture estimation.

Optionally, in the fourth operation, the renderer 317/356 may render the full-resolution content image 316 from a low-resolution integration-feature of the input image and obtain the generated image (the composite image) of which the input content is the same as that of the input image and of which the image style is the preset image style.

Overall, the process of converting an image style illustrated in FIG. 3 may mainly include the training process 310 and the inference process 350.

The training process 310 may input the content image 311, that is, a downsampled low-resolution input image sample, to the content backbone network 312 to extract image content and may input the style image 313, that is, a downsampled low-resolution composite image sample, to the style backbone network 314 to extract an image style.

The content backbone network 312 may output a low-resolution image-content feature to the bidirectional network 315, and the style backbone network 314 may output a low-resolution image-style feature to the bidirectional network 315.

The bidirectional network 315 may integrate the two low-resolution features and output a low-resolution feature integration result to the renderer 317.

When receiving the low-resolution feature integration result and the full-resolution content image 316 of an input image sample, the renderer 317 may use the low-resolution feature integration result and the full-resolution image content 316 of the input image (content image) sample and generate and output the composite image 320.

The training process 310, based on the output composite image 320 and a training sample corresponding to the output composite image 320, may determine whether the content and the style each satisfy a training termination condition. The training process 310, when the training termination condition is satisfied, may result in a trained style conversion network model, or otherwise, by having adjusted a model parameter based on a preset loss function; the training process 310 may continue to train the style conversion network model. The loss function in the training process 310 of FIG. 3 may be the KL loss function 321 and the bidirectional spatial Laplacian regularization loss function 322, but examples are not limited thereto.

The inference process 350 may input the downsampled low-resolution input image 351 to the content backbone network 352 to extract image content, and the content backbone network 352 may output a low-resolution image-content feature (e.g., in an outputted feature map).

When receiving the low-resolution image-content feature and the preset low-resolution image-style feature 353, the bidirectional network 354 may generate a low-resolution integration feature (e.g., in a feature map of integration features) by integrating the two low-resolution features and output the low-resolution integration feature to a renderer 356. The preset low-resolution (or not low-resolution) image-style feature 353 may be selected from among various image style features for which the model has been trained.

When receiving the low-resolution integration feature and full-resolution image content 355 of an input image, the renderer 356 may render and output a composite image 357. The generated composite image 357 may have suitable style (corresponding to the preset image-style feature 353) and image content corresponding to the input image 351 and may therefore be suitable to be the image to be processed in operation 110.

In an example, converting an input image to a preset image style (e.g., a composite image style) may contribute to narrowing a gap in fields between an input image and training data (the composite image style) including an object posture annotation, improve the performance of a model, and improve the robustness of 3D object posture estimation.

In an example, converting an image style is light in terms of a processing load, which rarely affects execution speed. In addition, in the examples herein, one input image is used in a process of converting an image style, which may further minimize impact on execution time.

In operation 110, the key point information of the image to be processed may specifically be coordinate information of a visible key point. In this case, the visible key point may refer to a valid key point which is not covered by itself or another object.

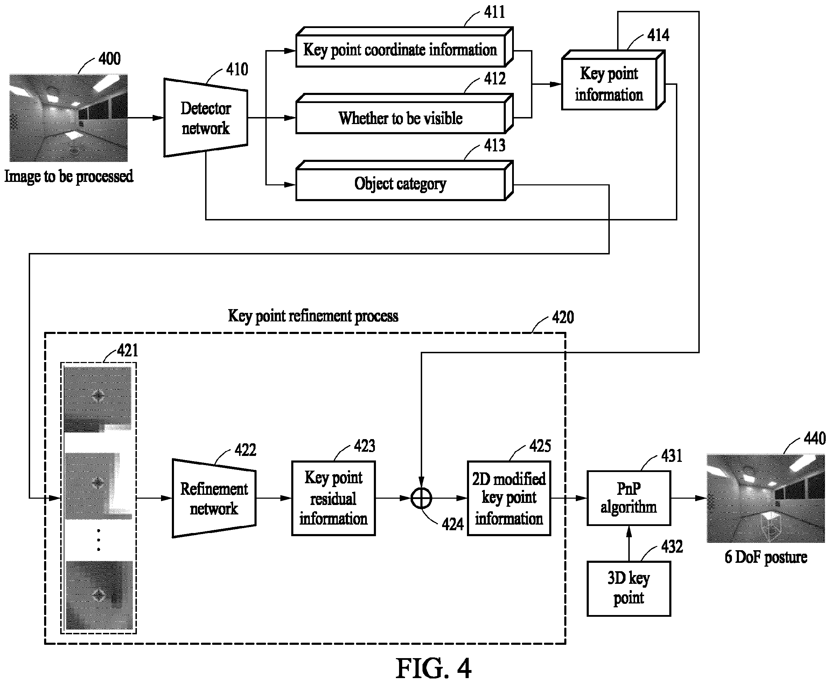

FIG. 4 illustrates an example of a refinement method of estimating an object posture, according to one or more embodiments.

Referring to FIG. 4, in operation 110, specifically, the apparatus for estimating an object posture ("apparatus"), through a detector network 410, may determine key point coordinate information 411 and key point visible information 412 in an image 400 to be processed and may determine key point information based on the key point coordinate information 411 and the key point visible information 412. In this case, the determined key point information may be visible key point coordinate information 414.

In an example, based on receiving the image 400 to be processed, the detector network 410 may output the key point coordinate information 411 ($Kj(x,y)$) and the key point visible information 412 ($Vk$) of an object in the image 400 to be processed. Additionally, the detector network 410 may output an object category 413 ($Ci$). In addition, the detector network 410 may obtain an aligned RoI feature map of the image 400 to be processed through intermediate processing of the detector network 410.

Because the subsequent process of estimating an object posture includes an operation of integrating features of multiple scales, feature maps of the same size may be obtained by performing object posture estimation RoI alignment.

Optionally, a key point (coordinate information) residual loss function may use a wing loss function, a key point visible information classification loss function may use an L1 loss function, and an object category classification function may use a cross-entropy loss function, but examples are not limited thereto.

Optionally, the detector network 410 may output valid visible key point information 414 of the object in the image 400 to be processed through a visible key point proposal network. Specifically, the visible key point proposal network may first predict visible key point proposals and determine final valid visible key point information 414 of the predicted visible key point proposals.

In an example, when predicting the visible key point proposals by the visible key point proposal network, prediction results of several adjacent region units may be integrated. For example, when predicting whether a table corner is a visible key point, a prediction proposal corresponding thereto may be obtained by integrating feature maps of several region units adjacent to a feature map where the table corner is positioned.

In an example, when integrating prediction results of feature maps of several adjacent region units, the feature maps may be weighted and summed. Optionally, weighting coefficients of a weighted summation may be obtained through a trained neural network model. Alternatively, the weighting coefficients may be obtained in another method. The visible key point proposal network may configure adjacent region units as a graph and may obtain a weighting coefficient of each region unit from the structure and connection of the graph. In this case, nodes of the graph may represent each respective region unit and edges of the graph may represent similarity of the adjacent region units linked by the edges.

In an example, the visible key point proposal network may use another training method different from 2D image segmentation in a training process and may use a combination of several training methods during the training process, which may be applicable to single-step or multi-step object visible key point proposal prediction.

After obtaining the key point coordinate information 411 and the key point visible information 412 of an object in the image 400 to be processed, by determining (and filtering accordingly) whether a key point of the object is visible and by deleting an unnecessary key point which is covered by itself or another object, valid (and only valid) visible key point information 414 may be maintained.

In addition, based on the valid visible key point information 414, by cropping a feature map corresponding to the image 400 to be processed, a key point feature map 421 corresponding to key point information may be obtained and may be used for operation 120.

In an example, an RoI feature map of the image 400 to be processed may be obtained through the detector network 410. In this case, prior to operation 120, an operation of determining the key point feature map corresponding to the image 400 to be processed, in the RoI feature map, based on the key point information, may be further included.

For example, for each key point $(x, y)$, a $16 \times 16$ feature map centered on the key point $(x, y)$ may be cropped from the RoI feature map corresponding to the image 400 to be processed. In actual application, one of ordinary skill in the art may set a cropping method based on an actual situation, but examples are not limited thereto.

In an example, when the image 400 to be processed includes at least two objects, an object category of the image 400 to be processed may be determined through the detector network 410. In this case, prior to operation 120, based on the object category 413 and the valid visible key point information 414, an operation of determining a key point feature map corresponding the image 400 may be further included.

In other words, when the image 400 to be processed includes multiple objects, for each key point $(x, y)$, from the RoI feature map corresponding to the image 400 to be processed, a feature map centered on the key point $(x, y)$ may be cropped based on object categories respectively corresponding to the objects. In actual application, a cropping method may be set based on an actual situation, but examples are not limited thereto.

Operation 120 may further include a key point refinement process 420. Specifically, the apparatus may perform key point offset regression on a key point feature map corresponding to key point information and obtain key point offset residual information.

In addition, based on the key point offset residual information and the key point information, the apparatus may obtain modified key point information. Specifically, as illustrated in FIG. 4, the apparatus may input cropped key point feature maps 421 to a refinement network 422, and the refinement network 422 may perform key point offset regression on the key point feature maps 421 and obtain key point offset residual information 423 $(\Delta x, \Delta y)$.

The apparatus may add key point information $(x, y)$ to the key point offset residual information 423 $(\Delta x, \Delta y)$ by using an adder 424 and may obtain modified key point information 425 $(\hat{x} = x + \Delta x, \hat{y} = y + \Delta y)$.

In examples herein, a loss function that is used in the key point refinement process 420 may be an L1 loss function, but examples are not limited thereto.

In examples herein, a feasible implementation method may be provided for the refinement network 422. Specifically, the refinement network 422 may include sub-networks, of at least one resolution, connected to one another.

In operation 120, the obtaining of key point offset residual information may specifically include the following steps.

The refinement network 422 may extract semantic features of each scale corresponding to the key point feature map from the key point feature map corresponding to the key point information through the sub-networks of at least one resolution. In addition, the refinement network 422 may integrate semantic features of each scale and obtain an integrated semantic feature. In addition, the refinement network 422 may obtain the key point offset residual information by performing regression on the integrated semantic feature through a fully connected layer.

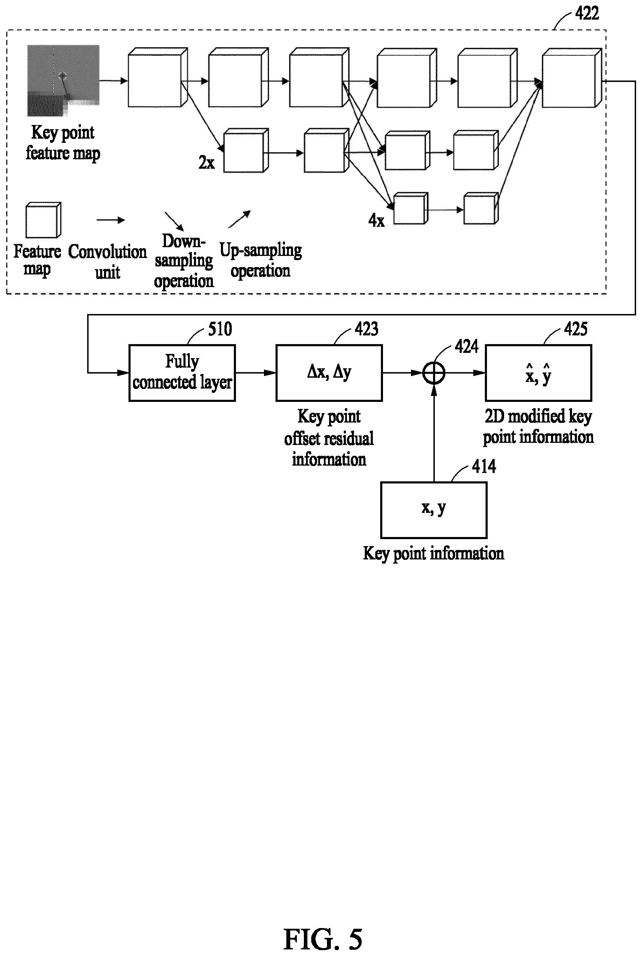

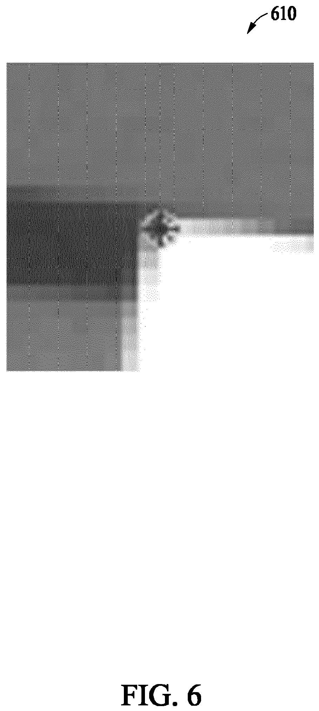

FIG. 5 illustrates an example refinement network, according to one or more embodiments. FIG. 6 illustrates an example of representing modified key point information, according to one or more embodiments.

Referring to FIG. 5, a refinement network 422 may use, as a backbone network, a structure similar to a lightweight high-resolution network-18 (Lite-HRNet). The refinement network 422 may maintain a high-resolution representation throughout the refinement network 422. The refinement network 422 may have sub-networks (with respective resolutions) arranged in an order of gradually increasing resolution, i.e., from a high-resolution sub-network to a low-resolution sub-network. The sub-networks may be arranged to provide multiple levels of resolution one by one and may be connected in parallel, for example, at points where up-sampling and down-sampling correspond (e.g., where resolution of one sub-network's output (or input) matches the resolution of another sub-network's input (or output)). The refinement network 422 may extract semantic features of each scale corresponding to the key point feature map from a key point feature map corresponding to key point information through the sub-network of each resolution.

In addition, by repeating multi-scale integration, the refinement network 422 may obtain a sophisticated high-resolution representation by receiving information from parallel representations, where high-resolution to low-resolution representations are different from each other. Accordingly, the accuracy of predicted key point offset may increase.

In addition, the refinement network 422 may perform regression on an integrated semantic feature to a fully connected layer and obtain predicted key point offset residual information (or key point residual information). As described above, the apparatus for estimating an object posture may add key point offset residual information 423 ($\Delta x$, $\Delta y$) to valid visible key point information 414 ($x$, $y$) and may obtain 2D modified key point information 425 ($\hat{x} = x + \Delta x$, $\hat{y} = y + \Delta y$).

Overall, the processing of the refinement network 422 illustrated in FIG. 5 may be as follows.

(1) The refinement network 422 may configure sub-networks of multiple resolutions (three types are provided as examples in FIG. 5 - see the horizontal sequences of sub-networks) through a convolution unit, an up-sampling operation, and a downsampling operation. With the multi-resolution sub-networks, the refinement network 422 may extract semantic features of each scale corresponding to the key point feature map.

(2) The refinement network 422 may integrate semantic features of each scale (resolution) and obtain an integrated semantic feature.

(3) The apparatus may perform regression on the integrated semantic feature through a fully connected layer 510 and obtain the key point offset residual information 423.

(4) The apparatus may add the key point offset residual information 423 to the valid visible key point information 414 corresponding to the key point offset residual information 423 by using the adder 424 and obtain the 2D modified key point information 425.

In this case, an image is obtained which is rendered from the obtained 2D modified key point information 425. An example of such an image is shown as image 610 in FIG. 6.

The refinement network 422 illustrated in FIG. 5 may be highly flexible because the number of operations and rates is adjustable according to the required speed in an inference process.

In operation 130, the apparatus may estimate the object posture by using a perspective-n-point (PnP) algorithm.

Specifically, key point information is 2D key point information. In addition, operation 130 may include estimating the object posture of an object in an image to be processed through the PnP algorithm, based on 2D modified key point information and a preset 3D model set. Specifically, as illustrated in FIG. 4, a 6 DoF posture 440 of an object (or a 6 DoF posture) may be estimated in the image 400 to be processed.

In this case, the PnP algorithm may obtain a motion from a 3D to 2D point pair and may obtain a posture of a camera according to actual coordinates in a space and image coordinates (e.g., a sensed posture of the camera). In an example, the PnP algorithm may estimate the posture of the camera when projection positions (2D key points) respectively corresponding to 3D key points are known.

In an example, the preset 3D model set may include 3D models of respective object in an actual scene corresponding to the image 400 to be processed. In an actual application, the apparatus may obtain each 3D model from a known computer aided design (CAD) model (the example of FIG. 4) of each object. For example, the apparatus may search for and obtain a 3D model of an object from a 3D CAD model library of the object or obtain each 3D model by scanning a 3D object, but the sources of the preset 3D model set are not limited thereto.

In addition, when determining 2D key point information in the image 400 to be processed by inputting the image 400 to be processed to the detector network 410, the detector network 410 may output the predicted object category 413 (*Ci*) of the object. In other words, operation 110 may include the determining of the object category 413 in the image 400 to be processed through the detector network 410. The determined object category 413 may be used to determine 3D key point information.

Specifically, the estimating of the 6 DoF posture 440 in the image 400 to be processed through a PnP algorithm 431 may include determining 3D key point information 432 based on the object category 413 and a 3D model set, and estimating the 6 DoF posture 440 in the image 400 to be processed by using the PnP algorithm 431 based on the 2D modified key point information 425 and the 3D key point information 432.

In an example, the apparatus may efficiently search for a 3D model set in combination with the object category 413. Accordingly, the apparatus may estimate the 6 DoF posture 440 in the image 400 to be processed by using the PnP algorithm 431 based on the 2D modified key point information 425 and the 3D key point information 432.

Overall, the process of estimating an object posture in FIG. 4 may involve the following operations.

(1) The apparatus may input the image 400 to be processed to the detector network 410. The detector network 410 may output the image's key point coordinate information 411 and the key point visible information (whether to be visible) 412 of an object in the image 400 to be processed. In actual application, the detector network 410 may output an object category.

(2) The apparatus may determine and filter whether a key point of the object is visible, based on the key point coordinate information 411 and the key point visible information 412 of the object in the image 400 to be processed, delete an unnecessary key point which is covered by itself or another object, and maintain valid visible key point information 414.

(3) The apparatus may crop a feature map corresponding to the image 400 to be processed, based on the valid visible key point information 414, and obtain the key point feature map 421 corresponding to key point information.

(4) The apparatus may input the cropped key point feature map 421 to the refinement network 422. The refinement network 422 may perform key point offset regression on the key point feature map 421 and obtain the corresponding key point offset residual information 423.

(5) The apparatus may use the adder 424 to add the key point offset residual information 423 to the valid visible key point information 414 and thus obtain the 2D modified key point information 425.

(6) The apparatus may estimate the 6 DoF posture 440 of the object in the image 400 to be processed through the PnP algorithm 431 based on the 3D key point information 432 (e.g., 3D key point information of a 3D model, e.g., a CAD model) corresponding to the 2D modified key point information 425.

In this case, the key point refinement process 420 may specifically include operations (4) and (5) above, but examples are not limited thereto.

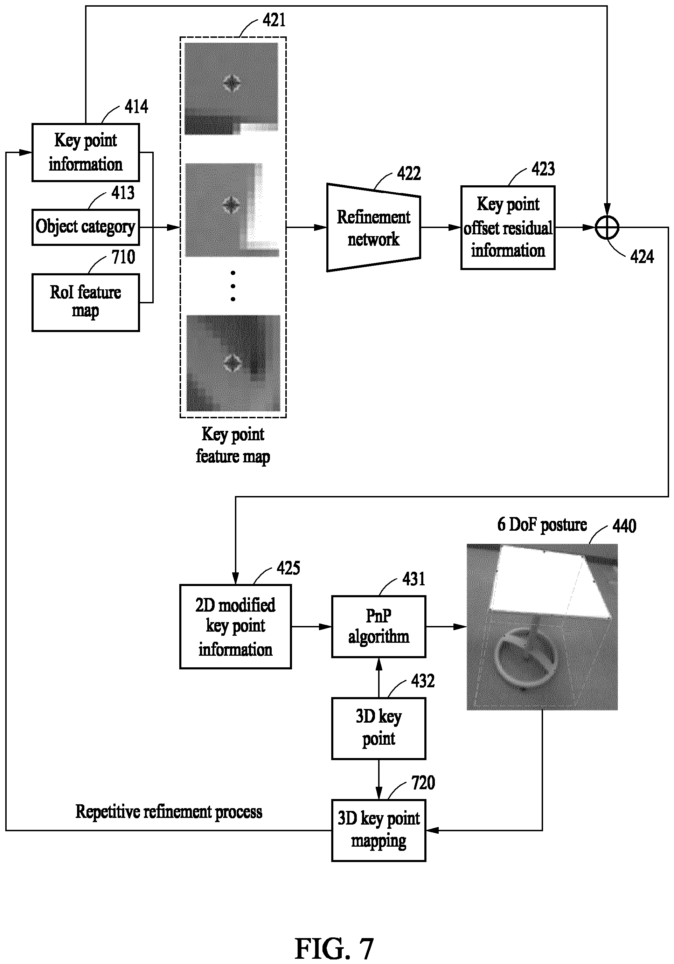

In examples herein, a key point alignment method may be repeatedly used to estimate an object posture. For example, methods of estimating an object posture may alternately update a key point of the object and the 6 DoF posture of the object by repeating operations 110 to 130. In this case, a feedback loop of repeatedly aligning key points is described below with reference to FIG. 7.

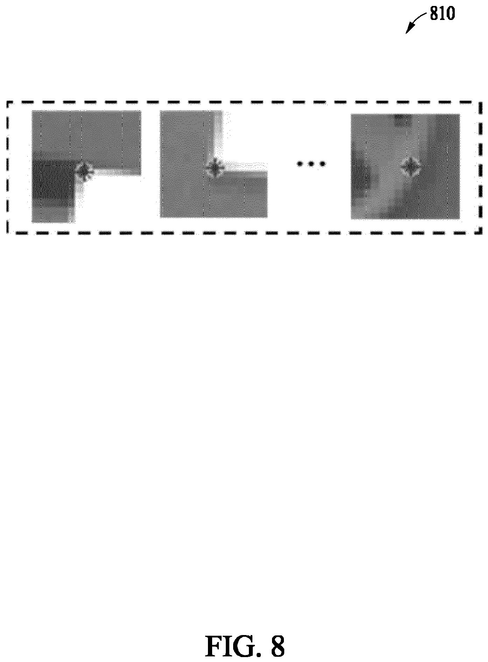

FIG. 7 illustrates an example of an iterative refinement process to estimate an object posture, according to one or more embodiments. FIG. 8 illustrates another example of representing modified key point information, according to one or more embodiments.

Referring to FIG. 7, key point information may be 2D key point information. A method of estimating an object posture, after first estimating a 6 DoF posture 440 in an image 400 to be processed, may determine 3D key point mapping information 720 of an object in the image 400 to be processed based on the estimated 6 DoF posture 440 in the image 400 to be processed (up until a termination condition is satisfied). The method of estimating an object posture may obtain updated valid visible key point information 414 based on the 3D key point mapping information 720. In addition, the method of estimating an object posture may iteratively perform operations of redetermining 2D modified key point information 425, based on the updated valid visible key point information 414, and estimating the 6 DoF posture 440 in the image 400 to be processed, based on the redetermined 2D modified key point information 425.

Specifically, the determining of the 3D key point mapping information 720 of the object in the image 400 to be processed, based on the estimated 6 DoF posture 440 may include the determining of the 3D key point mapping information 720 of the object in the image 400 to be processed, based on the 6 DoF posture 440 estimated in the image 400 to be processed, a preset 3D model set, and a camera eigen matrix.

In this case, the preset 3D model set may include a 3D model of each object in an actual scene corresponding to the image 400 to be processed. In actual application, each 3D model may be obtained as known CAD models (the example of FIG. 7). For example, the apparatus may search for and obtain a 3D model of an object from a 3D CAD model library or obtain each 3D model corresponding to the object by scanning a 3D object, but the preset 3D model set is not limited thereto.

In an example, the determining of the 3D key point mapping information 720 of the object in the image 400 to be processed (based on the 6 DoF posture 440 estimated in the image 400 to be processed, the preset 3D model set, and the camera eigen matrix) may include the determining of the 3D key point mapping information 720 based on the estimated 6 DoF posture 440, 3D key point information 432 of the preset 3D model, and the camera eigen matrix.

In this case, the camera eigen matrix may be an innate attribute of a camera, and each camera may have a different camera eigen matrix. In an example, an input image may be obtained such that an eigen matrix of a camera which has captured the input image may correspond to the obtained input image.

In an example, a current iteration (a kth iteration) may involve determining, for the k+1th iteration, by the apparatus, key point information in an updated image to be processed. After estimating an object posture in the kth iteration, the apparatus may determine 3D key point mapping information of the object in the image to be processed by combining 3D key point information of the preset 3D model set with the camera eigen matrix. By using the 3D key point mapping information of the object, the apparatus may update key point information in the image to be processed that is used in the kth iteration, obtain the key point information in the image to be processed that is used in the k+1th iteration, and perform key point refinement and object posture estimation in the k+1th iteration.

For example, when the current iteration is the kth iteration, an estimated object posture may be $[R^{(k)}T^{(k)}]$. Here, $R$ denotes a rotational matrix and $T$ denotes a translational vector. When 3D key point information is $P = [P1, P2, ..., Pn]$ in a 3D model set corresponding to the 3D key point information and a camera eigen matrix is $K$, the 3D key point mapping information may be calculated based on Equation 1 below.

### Equation 1

$$p^{(k+1)} = K[R^{(k)}T^{(k)}]P$$

The apparatus for estimating an object posture may obtain the key point information $p^{(k+1)}$ of the k+1th iteration by updating a 2D key point, based on the calculated 3D key point mapping information.

Accordingly, the apparatus may input a feature map centered on each key point to the refinement network 422, based on the updated key point information $p^{(k+1)}$, and obtain modified key point information $\hat{p}^{(k+1)}$.

In addition, the apparatus may update the object posture $[R^{(k+1)}T^{(k+1)}]$ estimated in the k+1th iteration in the image to be processed by using a PnP algorithm 431, based on the modified key point information $\hat{p}^{(k+1)}$.

The apparatus may repeatedly update the key point information and 6 DoF posture of the object by repeating the process above and improve the accuracy of estimating the key point information and 6 DoF posture of the object.

The iterative updating of the key point information may be terminated when a termination condition is satisfied. The termination condition may be (i) a difference of a key point before and after modification is less than a threshold, and/or (ii) the number of modifications of the key point reaches a predetermined number of times. The number of modifications of the key point may be the same as the number of iterations of the refinement of an object posture.

In an example, the apparatus may terminate the repetition only when the difference of a key point before and after modification is less than the threshold. The apparatus may terminate the iterating only when the number of modifications of the key point reaches the predetermined number of times (that is, the maximum number of iterations). Alternatively, the apparatus for estimating an object posture may set two conditions at the same time and may set to terminate the iterating when either of the two conditions is satisfied.

Specifically, whether the difference of a key point before and after modification is less than a threshold may be determined based on a sum of differences of key points before and after modification (per an iteration) being less than the threshold and/or based on a difference of each key point before and after modification (per an iteration) being less than the threshold.

For example, an updated sum D of differences of key points before and after modification is represented as Equation 2 below.

### Equation 2

$$D = \text{sum}\left(\left\|\hat{p}^{(k+1)} - \hat{p}^{(k)}\right\|^2\right)$$

In other words, the apparatus for estimating an object posture may not perform a next iteration (e.g., the k+2th) when a sum of differences between a modified key point $\hat{p}^{(k+1)}$ obtained in the k+1th iteration and a modified key point $\hat{p}^{(k)}$ obtained in the kth iteration is less than the threshold.

Alternatively, the apparatus for estimating an object posture may not perform a next iteration (e.g., k+2th) when a difference between the modified key point $\hat{p}^{(k+1)}$ obtained in the k+1th iteration and the modified key point $\hat{p}^{(k)}$ obtained in the kth iteration is less than the threshold.

Alternatively, the apparatus may not perform the k+2th iteration when the number of iterations reaches a predetermined limit, e.g., k+1th iterations (i.e., refinement may end when an iteration limit is reached).

In this case, the object posture $[R^{(k+1)}T^{(k+1)}]$ estimated in the image to be processed in the k+1th iteration may be used as a network output. In other words, the object posture $[R^{(k+1)}T^{(k+1)}]$ estimated in the k+1th iteration may be a final result of estimating an object posture.

The iterative refinement process illustrated in FIG. 7 may be performed by the apparatus as follows.

(1) Crop a key point feature map 421 centered on each key point, based on initialized 2D valid visible key point information 414, an object category 413, and an RoI feature map 710.

(2) Input the cropped key point feature map 421 to a refinement network 422. The refinement network 422 may perform key point offset regression on the key point feature map 421 and obtain the key point offset residual information 423 corresponding to the key point feature map 421.

(3) Add key point offset residual information 423 to the 2D valid visible key point information 414 corresponding to the key point offset residual information 423 by using the adder 424 and obtain 2D modified key point information 425.

(4) Estimate the 6 DoF posture 440 in the image to be processed through the PnP algorithm 431, based on the 2D modified key point information 425 and the 3D key point information 432 corresponding thereto.

(5) Determine the 3D key point mapping information 720 of the object in the image to be processed, based on the 6 DoF posture 440 estimated in the image to be processed, the 3D key point information 432 corresponding to the object, and a camera eigen matrix.

(6) Update the key point information of operation (1), based on the 3D key point mapping information 720, obtain the updated key point information.

The apparatus may repeat (iterate) operations (1) to (6) up until a difference of a key point before and after modification is less than a threshold and/or the number of iterations reaches the predetermined maximum number of iterations.

FIG. 8 illustrates an example image 810 rendered from the obtained 2D modified key point information 425.

In an example, an iterative refinement method of estimating a 6 DoF posture of an object may use a convolutional neural network (CNN) network, but examples are not limited thereto. Specifically, the apparatus may project a 3D key point of the object to a 2D image, extract a feature from an encoder, and obtain 2D key point information corresponding thereto. The apparatus may obtain modified 2D key point information from a key point feature map corresponding to the 2D key point information of the object through the CNN and use the obtained modified 2D key point information to predict a 3D posture of the object.

In examples herein, apparatuses for estimating an object posture may iteratively optimize the key point and 6 DoF posture of an object through iterative refinement and improve the estimation of an object posture.

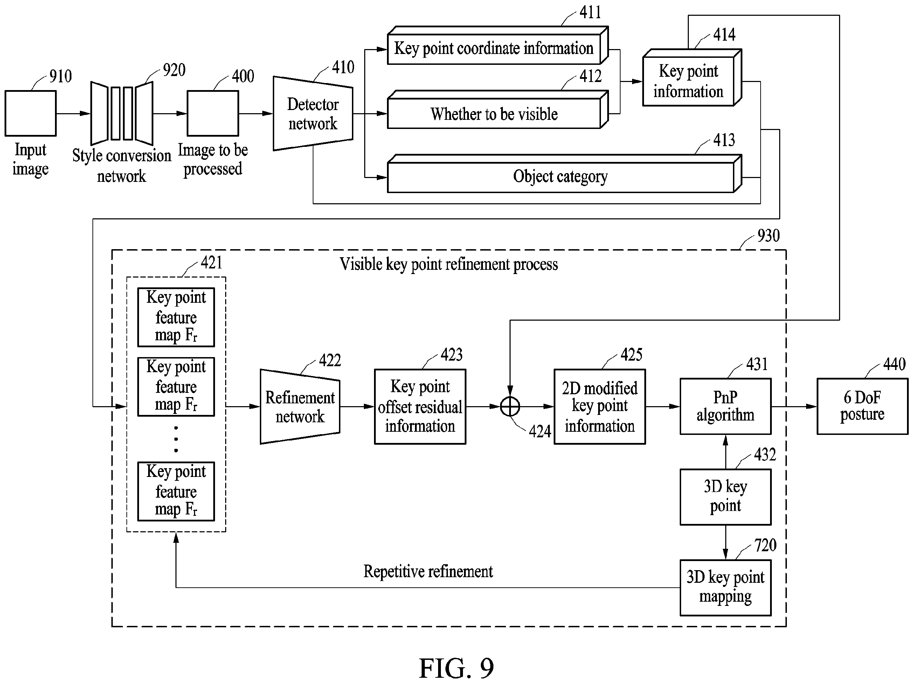

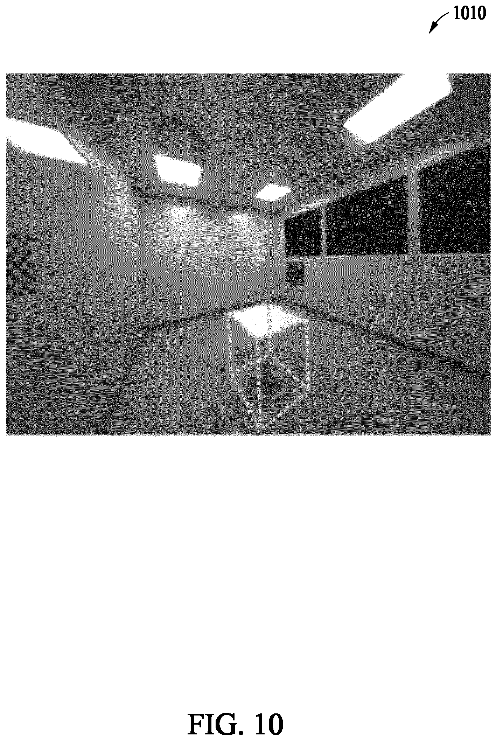

FIG. 9 illustrates an example of an overall process of estimating an object posture, according to one or more embodiments. FIG. 10 illustrates an example of representing an object posture estimated from an image to be processed, according to one or more embodiments.

Referring to FIG. 9, the overall process of estimating an object posture may include the following operations.

(1) Input an input image 910 to a style conversion network 920, and the style conversion network 920 may output an image 400 to be processed in a full-resolution composite image style.

(2) Input the image 400 to be processed to a detector network 410, and the detector network 410 may output key point coordinate information 411 and key point visible information (whether to be visible) 412 of an object in the image 400 to be processed. In actual application, the detector network 410 may output an object category 413 and an intermediate processing result RoI feature map.

(3) Determine and filter whether a key point of the object is visible, based on the key point coordinate information 411 and the key point visible information 412 of the object in the image 400 to be processed, and obtain valid visible key point information 414.

(4) Crop a key point feature map 421 centered on each key point, based on the valid visible key point information 414, the object category 413, and the RoI feature map. In this case, the apparatus for estimating an object posture may need to crop the key point feature map 421 according to the object category 413 when the image 400 to be processed includes multiple objects.

(5) Input the cropped key point feature map 421 to a refinement network 422. The refinement network 422 may perform key point offset regression on the key point feature map 421 and obtain key point offset residual information 423 corresponding to the key point feature map 421.

(6) Add the key point offset residual information 423 to the 2D valid visible key point information 414 corresponding to the key point offset residual information 423 by using the adder 424 and obtain 2D modified key point information 425.

(7) Estimate a 6 DoF posture 440 in the image 400 to be processed through a PnP algorithm 431, based on the 2D modified key point information 425 and 3D key point information 432 corresponding thereto.

(8) Determine 3D key point mapping information 720 of the object in the image 400 to be processed, based on the 6 DoF posture 440 estimated in the image 400 to be processed, the 3D key point information 432 corresponding to the object, and a camera eigen matrix.

(9) Update the valid visible key point information 414 of operation (3), based on the 3D key point mapping information 720, obtain the updated valid visible key point information 414, and perform a series of operations from operation (4) and the subsequent operations again, based on the updated valid visible key point information 414.

Operations (4) to (9) may be repeated up until a difference of a key point before and after modification is less than a threshold and/or until the number of iterations reaches the predetermined maximum number of iterations.

FIG. 10 illustrates an example of an image 1010 rendered from the 6 DoF posture 440 estimated in the image 400 to be processed.

Some of the methods of estimating an object posture may solve issues, which are not readily trainable-for in the prior art, by using end-to-end trainable key point regression and refinement processes.

Some of the methods of estimating an object posture may be effective in speed and accuracy because there is no image rendering and comparison cycle, as included in typical posture refinement methods, which consumes a large amount of time.

A 6 DoF posture estimation and optimization method of a 3D object, based on an input of a color image, may improve the efficiency and robustness of a system in an AR application.

A style conversion deep learning network may solve/reduce an issue of a gap in data fields and improve the robustness of estimating a 3D object posture by converting an input image to an image in a composite image style and processing the converted input image.

A method of estimating the 6 DoF posture of an object, based on the visible 2D key point prediction of the object and key points of the object, may solve/reduce issues of data noise and omission.

A method of iterative optimization of the key points of the object and optimization of 6 DoF posture estimation may improve the accuracy of a result by using a priori geometric knowledge.

Methods of estimating an object posture herein may implement fast and accurate AR interaction.

An AR application may be implemented through 3D virtual-reality alignment, and the recognition/estimation of a 6 DoF posture of an object may thus be highly important. By using the method of estimating an object posture provided in the examples herein, the AR application may accurately estimate a 3D posture and rapidly and effectively align virtual content with an actual object in real time. In particular, the AR application may estimate a posture of an object moving in an actual scene in real time and timely update virtual content when using a visual device (e.g., a heads-up display, transparent display, a display on which an AR graphic layer overlays a real-time video layer, etc.) in an AR system, and thus may readily process interaction between a person and an object, especially, the object moving in an actual scene.

In actual application, training data including an actual posture annotation that is used for training a model may have a certain style, such as a composite image style. When processing a collected/captured input image of an actual scene (having an image style different from the composite image style), a gap may occur in information fields between pieces of data, which may affect the performance of the model.

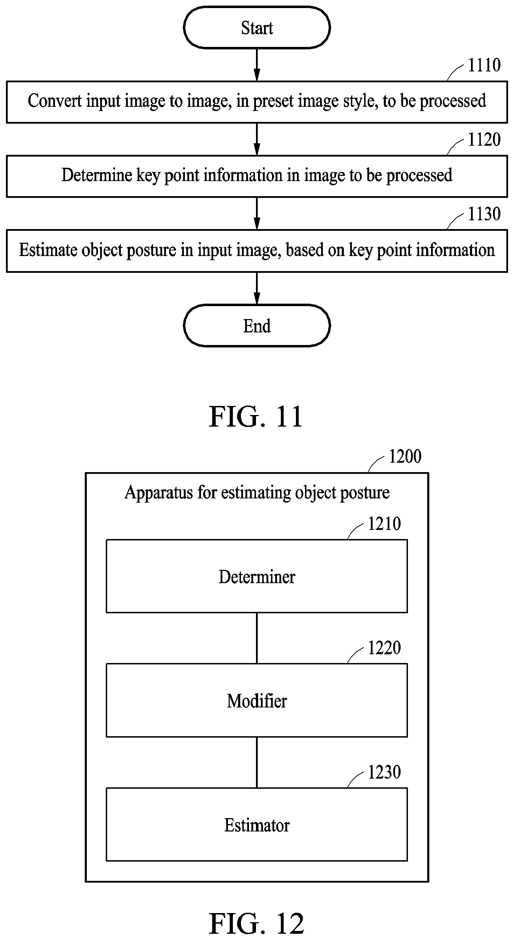

FIG. 11 illustrates another example of a process of a method of estimating an object posture, according to one or more embodiments.

Referring to FIG. 11, the method of estimating an object posture may include the following operations.

In operation 1110, the apparatus may convert an input image to an image, in a preset image style, to be processed.

In operation 1120, the apparatus may determine key point information in the image to be processed.

In operation 1130, the apparatus may estimate an object posture in the image to be processed, based on the key point information.

In this case, an image style may refer to a visual experience or effect represented as image properties, such as lighting, texture, color temperature, tone, contrast, saturation, luminance, and the like of an image. For example, an oil painting style, a drawing style, a cartoon style, and the like may be considered different styles from one another. In another example, an input image (a photo of an actual scene) collected by a collecting device and a composite image (a virtual image synthesized by a processor) may also be considered different styles from each other, and the input image may be generally more delicate in texture and darker in luminance than the composite image. An image may cause a different effect according to its image style, even if the content of the image is the same.

In an example, the preset image style may be, for example, an image style of training data including an actual posture annotation that is used to train a model, such as a composite image style, but examples are not limited thereto.

In the examples herein, as illustrated in FIG. 3, some processes of converting an image style may include the following operations.

A first operation of converting an image style may extract the feature of image content of an input image through a content backbone network 352. The input image may be a content image for extracting a content feature.

In an example, an image-content feature may be the feature of low-resolution image content (e.g., the low-resolution input image 351).

In this case, a low-resolution image may be an image of which resolution is lower than the full resolution of the input image. In an example, the degree of low resolution may not be specifically limited and may be set based on an actual situation.

In an example, the content backbone network 352 may directly extract a low-resolution image-content feature from an input actual image (e.g., a captured image of a real scene).

In an example, the low-resolution image content may be extracted by inputting, to the content backbone network 352, the low-resolution input image 351 obtained by downsampling an input image. However, examples are not limited to the example in FIG. 3, images input to the content backbone network 352 may be obtained based on different training methods from one another.

A second operation of converting an image style may obtain a preset image-style feature (e.g., the preset low-resolution image-style feature 353). In the examples herein, an image-style feature may be a low-resolution image-style feature.

In actual application, one of ordinary skill in the art may set a suitable low-resolution image-style feature in advance, based on an actual situation, and the examples herein may not specifically limit the type and content of a low-resolution image-style feature. A preset low-resolution image-style feature may be directly obtained and used in an online inference process.

In an example, the low-resolution image-style feature may directly use data in a training process and improve efficiency and reliability. For example, the preset low-resolution image-style feature may be an average value of low-resolution image-style features each corresponding to each training sample obtained in the training process.

The description on the training process provided with reference to FIG. 3 applies hereto.

The third operation of converting an image style may obtain a feature integrating an image-content feature with an image-style feature through a bidirectional network 354.

For example, a low-resolution integration feature after integrating a low-resolution image-content feature with a low-resolution image-style feature may be predicted by inputting two low-resolution features to the trained (low-resolution) bidirectional network 354.

The fourth operation of converting an image style (based on an integration feature) may render an input image through the renderer 317 and obtain a composite image (which may in turn be an image to be processed).

The input image may include input image content, and when inputting the input image and the integration feature to a trained renderer and rendering the input image and the integration feature, a generated image (the composite image) of which input content is the same as that of the input image and of which a style is a preset image style may be obtained. The composite image may be the image to be subsequently processed in a refinement operation and an object posture estimation.

Optionally, in the fourth operation, the renderer 317 may render the full-resolution content image 316 of the input image according to the low-resolution integration feature and thus obtain the generated image (the composite image) of which the input content is the same as that of the input image and of which the image style is the preset image style.

In an example, converting an input image to an image in a preset image style (e.g., a composite image style) may contribute to narrowing a gap in fields between an input image and training data (the composite image style) including an object posture annotation, improve the performance of a model, and improve the robustness of 3D object posture estimation.

In an example, converting an image style is light in terms of a processing load, which minimally affects execution speed. In addition, in the examples herein, one input image is used in a process of converting an image style, which may further reduce execution time.

In the examples herein, the descriptions provided above apply to other processes and advantageous effects and are not repeated.

FIG. 12 illustrates an example of an apparatus for estimating an object posture.

Referring to FIG. 12, an apparatus 1200 for estimating an object posture may include a determiner 1210, a modifier 1220, and an estimator 1230.

The determiner 1210 may determine key point information in an image to be processed.

The modifier 1220 may determine modified key point information based on a key point feature map corresponding to the key point information.

More specifically, the modifier 1220 may obtain key point offset residual information by performing offset regression on the key point feature map corresponding to the key point information and obtain the modified key point information based on the key point offset residual information and the key point information.

In this case, when determining the modified key point information based on the key point feature map corresponding to the key point information, the modifier 1220 may obtain the key point offset residual information by performing offset regression on the key point feature map corresponding to the key point information and obtain the modified key point information based on the key point offset residual information and the key point information.

The estimator 1230 may estimate an object posture in the image to be processed, based on the modified key point information.

Prior to determining the key point information in the image to be processed, the determiner 1210 may obtain an input image, convert the input image to an image in a preset image style, and obtain the image to be processed.

When obtaining the image to be processed by converting the input image to the image in the preset image style, the determiner 1210 may extract an image-content feature of the input image through a content backbone network, obtain a preset image-style feature, generate an integrated feature by integrating the image-content feature of the input image with the preset image-style feature, and obtain the image to be processed by rendering the input image with a renderer, based on the integrated feature. In an example, the image-content feature of the input image may be a low-resolution image-content feature, and the preset image-style feature is a low-resolution image-style feature.

In an example, the key point information may be 2D key point information.

The determiner 1210 may repeat (iterate) operations, up until a termination condition is satisfied, of determining 3D key point mapping information of an object in the image to be processed, based on the object posture estimated in the image to be processed, obtaining updated key point information based on the 3D key point mapping information, redetermining the modified key point information based on the updated key point information, and estimating the object posture in the image to be processed, based on the redetermined modified key point information. In this case, the termination condition may include at least one of a difference of a key point before and after modification being less than a threshold and the number of modifications of the key point reaching a predetermined number of times. In this case, the difference of a key point before and after modification being less than a threshold may include at least one of a sum of differences of at least one key point before and after modification being less than the threshold and a difference of each key point of the at least one key point before and after modification being less than the threshold.

When determining 3D key point mapping information of an object, the determiner 1210 may determine the 3D key point mapping information of the object in the image to be processed, based on the object posture estimated in the image to be processed, a preset 3D model set, and a camera eigen matrix.

When determining the key point information in the image to be processed, the determiner 1210 may determine key point coordinate information and key point visible information in the image to be processed through a detector network and determine the key point information based on the key point coordinate information and the key point visible information.

The determiner 1210 may obtain an RoI feature map in the image to be processed through a detector network.

Prior to determining the modified key point information, the determiner 1210 may determine a key point feature map corresponding to the RoI feature map, based on the key point information.

In addition, when the image to be processed includes two or more objects, the determiner 1210 may determine an object category in the image to be processed through the detector network. Prior to determining the modified key point information, the determiner 1210 may determine a key point feature map corresponding thereto, based on the object category and the key point information.

The key point information may be 2D key point information.

When estimating an object posture, the estimator 1230 may estimate the object posture of the object in the image to be processed through a PnP algorithm, based on 2D modified key point information and the preset 3D model set.

When determining the 2D key point information, the determiner 1210 may determine an object category in the image to be processed through the detector network.

When estimating an object posture, the estimator 1230 may determine 3D key point information based on the object category and the 3D model set and estimate the object posture in the image to be processed through the PnP algorithm, based on the modified 2D key point information and the 3D key point information.

The apparatus provided in the examples in the present description may execute the method provided in the examples in the present description, the implementation principles in the examples herein are similar to one another, and operations performed by each configuration in the apparatus in the examples herein may respectively correspond to the operations of the method provided in the examples herein. The method, corresponding to each configuration, described above applies to the detailed functional descriptions and advantageous effects of each configuration of the apparatus, and thus, the descriptions thereof are not repeated.

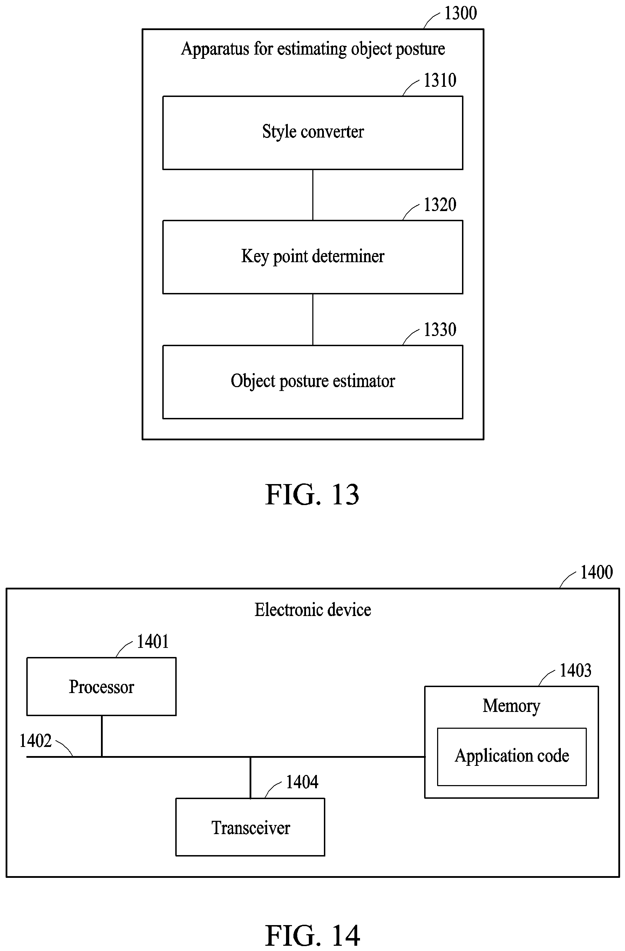

FIG. 13 illustrates another example of an apparatus for estimating an object posture.

Referring to FIG. 13, an apparatus 1300 for estimating an object posture may include a style converter 1310, a key point determiner 1320, and an object posture estimator 1330.

The style converter 1310 may convert an input image to an image, in a preset image style, to be processed.

More specifically, the style converter 1310 may extract an image-content feature of the input image through a content backbone network, obtain a preset image-style feature, obtain an integrated feature by integrating the image-content feature of the input image with the preset image-style feature, and obtain the image to be processed by rendering the input image with a renderer, based on the integrated image. In an example, the image-content feature of the input image may be a low-resolution image-content feature, and the preset image-style feature is a low-resolution image-style feature.

The key point determiner 1320 may determine key point information in an image to be processed.

The object posture estimator 1330 may estimate an object posture in the input image, based on the key point information.

The apparatus provided in the examples in the present description may execute the method provided in the examples in the present description, the implementation principles in the examples herein are similar to one another, and operations performed by each module in the apparatus in the examples herein may respectively correspond to the operations of the method provided in the examples herein. The method, corresponding to each module, described above applies to the detailed functional descriptions and advantageous effects of each module of the apparatus, and thus, the descriptions thereof are not repeated.

The apparatus provided in the examples herein may implement at least one module through an artificial intelligence (AI) model. AI-related functions may be performed by a non-volatile memory, a volatile memory, and a processor.

The processor may include at least one processor. In this case, the at least one processor may be a general-purpose processor, such as a central processing unit (CPU) and an application processor (AP), or a pure graphics processing unit (GPU), which is an AI-dedicated processor, such as a GPU, a visual processing unit (VPU), and/or a neural processing unit (NPU).

The at least one processor may control processing of input data based on the AI model or a predefined operation rule that is stored in the non-volatile memory and the volatile memory. The AI model or the predefined operation rule may be provided through training or learning.

In this case, the providing of the AI model or the predefined operation rule through training or learning may indicate the obtaining of a predefined operation rule or an AI model having a desired feature by applying a learning algorithm to pieces of training data. The training or learning may be performed by an apparatus itself in which AI is performed and/or implemented by a separate server/system.

The AI model may include a plurality of neural network layers. Each layer has a plurality of weights, and the calculation of one layer may be performed based on a calculation result of a previous layer and the plurality of weights of the current layer. A neural network may include, for example, a CNN, a deep neural network (DNN), a recurrent neural network (RNN), a restricted Boltzmann machine (RBM), a deep belief network (DBN), a bidirectional recurrent deep neural network (BRDNN), a generative adversarial network (GAN), and a deep Q network, but examples are not limited thereto.

The learning algorithm may be a method of training a predetermined target device (e.g., a robot) by using multiple training data and enabling, allowing, or controlling the target device to perform determination or prediction. The learning algorithm may include, for example, supervised learning, unsupervised learning, semi-supervised learning, or reinforcement learning, but examples are not limited thereto.

The examples herein may provide a memory, a processor, and an electronic device including a computer program stored in the memory, in which the processor may execute the computer program and implement the operations of each method in the examples described above.

FIG. 14 illustrates an example of an electronic device, according to one or more embodiments.

Referring to FIG. 14, an electronic device 1400 may include a processor 1401 and a memory 1403. The processor 1401 may be connected to the memory 1403, for example, through a bus 1402. Optionally, the electronic device 1400 may further include a transceiver 1404, in which the transceiver 1404 may be used for data interaction, such as data transmission and/or reception, between electronic devices. In actual application, the transceiver 1401 is not limited to one transceiver, and the structure of the electronic device 1400 is not limited to the examples herein.

The processor 1401 may be a CPU, a general-purpose processor, a digital signal processor (DSP), an application-specific integrated circuit (ASIC), a field programmable gate array (FPGA), or other programmable logic device, a transistor logic device, a hardware component, or any combination thereof. The processor 1401 may implement or execute the logic blocks, modules, or circuits described with reference to the examples herein. The processor 1401 may be, for example, a combination including one or more microprocessors or a combination of a DSP and a microprocessor.

The bus 1402 may include a path for transmitting information between the components described above. The bus 1402 may be a peripheral component interconnect (PCI) bus or an extended industry standard architecture (EISA) bus. The bus 1402 may be classified into an address bus, a data bus, a control bus, and the like. For ease of description, although one line is used to indicate the bus 1402 in FIG. 14, it does not mean that there is only one bus or one type of bus.

The memory 1403 may be or include read-only memory (ROM) or another type of static storage device for storing static information and instructions, random-access memory (RAM) or another type of dynamic storage device for storing information and instructions, electrically erasable programmable-only memory (EEPROM), a compact disc read-only memory (CD-ROM), or another compact disc storage, an optical disc storage (including a compressive optical disc, a laser disc, an optical disc, a digital versatile disc (DVD), a Blu-ray optical disc, and the like), a magnetic disc storage medium or another magnetic storage device, or a computer-accessible medium for providing and storing predicted program code in the form of instructions or data structures, but examples are not limited thereto.

The memory 1403 may be used to store a computer program for executing the examples herein and controlled by the processor 1401. The processor 1401 may execute the computer program stored in the memory 1403 and implement the operations of the methods described with reference to the examples herein.

In the examples herein, in object posture estimation performed by an electronic device, output data of features in an image may be obtained by using image data as input data of an AI model. The AI model may be obtained through training. Here, "being obtained through training" may refer to obtaining a predefined operation rule or AI model that is configured to perform a desired feature (or objective) by training a basic AI model with a plurality of sets of training data through a training algorithm. The AI model may include a plurality of neural network layers. Each of the plurality of neural network layers may include a plurality of weight values, and a neural network computation may be performed by a calculation between a calculation result from a previous layer and the plurality of weight values.

Techniques described herein may be used for various applications that use visual understanding, for example, object recognition, object tracking, image search, face recognition, scene recognition, 3D reconstruction/positioning, image enhancement, and so forth.

The computing apparatuses, the processors, the memories, the image sensors, the displays, the information output system and hardware, the storage devices, and other apparatuses, devices, units, modules, and components described herein with respect to FIGS. 1-14 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-14 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure is defined by the claims.

**Claims**

1. A method of estimating an object posture, the method comprising:

   determining key point information in an image;
   determining modified key point information based on a key point feature map corresponding to the key point information; and
   estimating an object posture of an object in the image, based on the modified key point information.

2. The method of claim 1, further comprising:
   prior to the determining the key point information in the image,

   receiving an input image; and
   obtaining the image by converting the input image to an image having a preset image style.

3. The method of claim 2, wherein
   the converting the input image to the image having the preset image style comprises:

   extracting an image-content feature of the input image by a content neural network;
   obtaining a preset image-style feature;
   generating an integrated feature by integrating the image-content feature of the input image with the preset image-style feature; and
   obtaining the image by rendering the input image with a renderer, wherein the rendering is based on the integrated feature.

4. The method of claim 3, wherein

   the image-content feature of the input image comprises a low-resolution image-content feature, and
   the preset image-style feature comprises a low-resolution image-style feature.

5. The method of one of claims 1 to 4, wherein
   the determining the modified key point information comprises:

> obtaining key point offset residual information by performing offset regression on the key point feature map; and
> obtaining the modified key point information based on the key point offset residual information and the key point information.

6. The method of one of claims 1 to 5, further comprising:
performing a refinement process on the object posture to increase an accuracy thereof by using the estimated object posture.

7. The method of claim 6, wherein

> the key point information comprises two-dimensional, 2D, key point information, and
> the performing the refinement process comprises:

>> determining 3D key point mapping information of the object in the based on the estimated object posture;
>> obtaining updated key point information based on the 3D key point mapping information;
>> redetermining the modified key point information based on the updated key point information; and
>> estimating the object posture based on the redetermined modified key point information.

8. The method of claim 7, wherein the determining the 3D key point mapping information is based on the estimated object posture, a preset 3D model set corresponding to the object, and a camera eigen matrix, or
wherein the performing the refinement process comprises:
iteratively performing the refinement process on the object posture until a termination condition is satisfied, wherein the termination condition comprises either a difference of a key point before and after modification being less than a threshold, or a number of modifications of the key point reaching a predetermined number of times.

9. The method of claim 8, wherein the difference of a key point before and after modification being less than a threshold comprises:
either a sum of differences of at least one key point before and after modification being less than the threshold, or a difference of each key point of the at least one key point before and after modification being less than the threshold.

10. The method of one of claims 1 to 9, wherein the determining the key point information comprises:

> determining key point coordinate information and key point visible information through a detector network that processes the image; and
> determining the key point information based on the key point coordinate information and the key point visible information.

11. The method of claim 11, wherein the determining the key point information further comprises obtaining a region of interest, RoI, feature map in the image through the detector network, and prior to the determining the modified key point information, determining the key point feature map corresponding the key point information in the RoI feature map, based on the key point information, or
wherein the method further comprises determining an object category of the object in the image through the detector network, and prior to the determining the modified key point information, determining the key point feature map based on the object category and the key point information.

12. A non-transitory computer-readable storage medium storing instructions that, when executed by a processor, cause the processor to perform the method of estimating an object posture, the method comprising:

> converting an input image to an image having a preset image style;
> determining key point information in the image having the preset image style; and
> estimating an object posture in the input image having the preset style based on the key point information.

13. An apparatus for estimating an object posture, the apparatus comprising:

> one or more processors;
> storage storing instructions configured to, when executed by the one or more processors, cause the one or more processors to:

>> determine key point information in an image;
>> determine modified key point information based on a key point feature map corresponding to the key point information; and
>> estimate an object posture of an object in the image based on the modified key point information.

14. The apparatus of claim 13, wherein the image is converted from an input image to be a version of the input image having an image style that the input image does not have, and

wherein the determining the key point information comprises extracting an image-content feature of the input image through a content network, obtaining an image-style feature, generating an integrated feature by integrating the image-content feature with the image-style feature, and rendering the image based on the input image and based on the integrated feature.

15. The apparatus of claim 13 or 14, wherein the modifying comprises obtaining key point offset residual information by performing offset regression on the key point feature map, and obtaining the modified key point information based on the key point offset residual information and the key point information, or wherein the one or more processors are further instructed to estimate the object posture by performing a refinement process on the object posture to increase an accuracy thereof by using the estimated object posture.

```
                         ┌─────────────┐
                         │    Start    │
                         └─────────────┘
                                │
                                │            ╱ 110
                                ▼
      ┌───────────────────────────────────────────────────┐
      │  Determine key point information in image to be processed  │
      └───────────────────────────────────────────────────┘
                                │
                                │            ╱ 120
                                ▼
      ┌───────────────────────────────────────────────────┐
      │  Determine modified key point information based on key point  │
      │   feature map corresponding to key point information  │
      └───────────────────────────────────────────────────┘
                                │
                                │            ╱ 130
                                ▼
      ┌───────────────────────────────────────────────────┐
      │  Estimate object posture in image to be processed, based on  │
      │              modified key point information             │
      └───────────────────────────────────────────────────┘
                                │
                                ▼
                         ┌─────────────┐
                         │     End     │
                         └─────────────┘
```

# FIG. 1

Start

↓
210

Receive input image

↓
220

Obtain image to be processed by converting input image to image in preset image style

↓
110

Determine key point information in image to be processed

↓
120

Determine modified key point information based on key point feature map corresponding to key point information

↓
130

Estimate object posture in image to be processed, based on modified key point information

↓

End

FIG. 2

Training process
310

Content
image
311

Style
image
313

Content
backbone
network
312

Style
backbone
network
314

Bidirectional
network
315

Full
resolution
image content
316

Renderer
317

Composite image
320

KL loss function
321

Regularization
loss function
322

Inference process
350

Image content
351

Content
backbone
network
352

Style feature
353

Bidirectional
network
354

Full
resolution
image content
355

Renderer
356

Composite image
357

FIG. 3

FIG. 4

FIG. 5

610

FIG. 6

FIG. 7

FIG. 8

EP 4 191 526 A1

FIG. 9

1010

FIG. 10

Start

Convert input image to image, in preset image style, to be processed ⌐1110

Determine key point information in image to be processed ⌐1120

Estimate object posture in input image, based on key point information ⌐1130

End

# FIG. 11

⌐1200

Apparatus for estimating object posture

⌐1210

Determiner

⌐1220

Modifier

⌐1230

Estimator

# FIG. 12

/ 1300

Apparatus for estimating object posture

/ 1310

Style converter

/ 1320

Key point determiner

/ 1330

Object posture estimator

# FIG. 13

/ 1400

Electronic device

/ 1401

Processor

/ 1403

Memory

/ 1402

Application code

/ 1404

Transceiver

# FIG. 14

Europäisches
Patentamt

European
Patent Office

Office européen
des brevets

## EUROPEAN SEARCH REPORT

Application Number

EP 22 20 8523

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUNZHI LIN ET AL: "Single-stage Keypoint-based Category-level Object Pose Estimation from an RGB Image", ARXIV.ORG, CORNELL UNIVERSITY LIBRARY, 201 OLIN LIBRARY CORNELL UNIVERSITY ITHACA, NY 14853, 13 September 2021 (2021-09-13), XP091054042, * abstract; figure 2 * ----- | 1-15 | INV. G06T7/70 |
| A | PAVLAKOS GEORGIOS ET AL: "6-DoF object pose from semantic keypoints", 2017 IEEE INTERNATIONAL CONFERENCE ON ROBOTICS AND AUTOMATION (ICRA), IEEE, 29 May 2017 (2017-05-29), pages 2011-2018, XP033126975, DOI: 10.1109/ICRA.2017.7989233 [retrieved on 2017-07-21] * abstract; figure 2 * ----- | 1-15 | |
| A | LIU XUEBING ET AL: "A Pose Estimation Approach Based on Keypoints Detection for Robotic Bin-picking Application", 2021 CHINA AUTOMATION CONGRESS (CAC), IEEE, 22 October 2021 (2021-10-22), pages 3672-3677, XP034099832, DOI: 10.1109/CAC53003.2021.9727987 [retrieved on 2022-03-03] * abstract; figure 4 * ----- | 1-15 | TECHNICAL FIELDS SEARCHED (IPC) G06T |

-/--

The present search report has been drawn up for all claims

| Place of search | Date of completion of the search | Examiner |
|---|---|---|
| Munich | 19 April 2023 | Rimassa, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

**EP 22 20 8523**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Kehl Wadim ET AL: "Deep Learning of Local RGB-D Patches for 3D Object Detection and 6D Pose EstimationSimultaneous Localization and Mapping (3D laser and RGB-D cameras) View project Medical Augmented Reality for Minimally Invasive Surgery View project Deep Learning of Local RGB-D Patches for 3D Object Detection and 6D", , 1 July 2016 (2016-07-01), XP093039886, Retrieved from the Internet: URL:https://www.researchgate.net/profile/W adim-Kehl-2/publication/305471420_Deep_Lea rning_of_Local_RGB-D_Patches_for_3D_Object _Detection_and_6D_Pose_Estimation/links/57 92338008ae33e89f754dbb/Deep-Learning-of-Lo cal-RGB-D-Patches-for-3D-Object-Detection- and-6D-Pose-Estimation.pdf [retrieved on 2023-04-18] * abstract * | 1-15 | |
| A | ZHAOXIN FAN ET AL: "Deep Learning on Monocular Object Pose Detection and Tracking: A Comprehensive Overview", ARXIV.ORG, CORNELL UNIVERSITY LIBRARY, 201 OLIN LIBRARY CORNELL UNIVERSITY ITHACA, NY 14853, 29 May 2021 (2021-05-29), XP081971800, * abstract * | 1-15 | |

**TECHNICAL FIELDS SEARCHED (IPC)**

The present search report has been drawn up for all claims

| Place of search | Date of completion of the search | Examiner |
|---|---|---|
| Munich | 19 April 2023 | Rimassa, Simone |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..............................................................
& : member of the same patent family, corresponding
document

EPO FORM 1503 03.82 (P04C01)